# FASCICULE DE BREVET EUROPEEN

(11) **EP 1 361 173 B1**
(45) Date de publication et mention de la délivrance du brevet: **15.04.2009**
(21) Numéro de dépôt: 03290114.2
(22) Date de dépôt: 16.01.2003
(51) Int. Cl.: B65D 77/20

(54) **Opercule destiné à fermer un récipient et à être enlevé partiellement pour permettre l'accès au produit conditionné dans le récipient**
Zum Teil entfernbare Deckelfolie
Partially removable lid

(30) Priorité: 16.01.2002 FR 0200488
(43) Date de publication de la demande: 12.11.2003
(73) Titulaire: Societe Alsacienne d'Aluminium, 67603 Selestat (FR)
(72) Inventeur: Hernandez, Ricardo, 67600 Selestat (FR); Linet, Emile, 67140 Stotzheim (FR)
(74) Mandataire: Chameroy, Claude

(56) Documents cités:
- EP-A- 0 007 971
- DE-A- 3 241 962
- US-A- 3 667 667
- US-A- 5 319 910

## Description

La présente invention concerne un opercule pour la fermeture d'un récipient dont l'entrée est délimitée par un rebord de scellage, cet opercule comportant une zone périphérique destinée à être fixée sur le rebord de scellage et pourvue d'une protubérance constituant une languette de préhension.

Les opercules de ce type sont couramment utilisés pour fermer des récipients contenant des produits laitiers tels que des yaourts.

Actuellement, les consommateurs enlèvent entièrement les opercules afin de pouvoir accéder librement aux produits conditionnés dans les récipients.

US 3 667 667 et EP 0 007 971 divulguent des opercules de ce type.

Il serait cependant souhaitable, en particulier lorsque les produits sont des boissons telles que des jus de fruit, de l'eau ou des yaourts à boire, de n'ouvrir que partiellement les récipients pour empêcher la formation d'éclaboussures et les risques de renversement accidentel pendant que les consommateurs portent les récipients à la bouche.

La présente invention se propose précisément d'apporter une réponse à ce problème et, pour ce faire, elle a pour objet un opercule selon la revendication 1.

Grâce à cette disposition, l'opercule se déchire le long de la ligne de fragilisation lorsque le consommateur soumet la languette à une traction exercée en direction du bord périphérique du récipient, parallèlement à la ligne de fragilisation.

Plus précisément, la partie de l'opercule qui est située dans le prolongement de la languette, sous l'action de cette traction, se désolidarise par pelage du rebord de scellage du récipient et se sépare du reste de l'opercule le long de la ligne de fragilisation, n'ouvrant donc que partiellement le récipient.

Les risques de renversement ou d'éclaboussure pendant que le consommateur porte le récipient à la bouche pour boire le contenu de celui-ci sont considérablement réduits.

Selon un mode de réalisation non revendiquée, la ligne de fragilisation est une droite située dans le prolongement de l'un des côtés longitudinaux de la languette de préhension.

Pour faciliter la déchirure de l'opercule le long de la ligne de fragilisation, le côté longitudinal de la languette qui est prolongé par cette ligne forme de préférence un angle aigu avec le bord extérieur de la zone périphérique.

Quant à l'autre côté longitudinal de la languette, il est de préférence tangent à l'opercule.

Selon un deuxième mode de réalisation non revendiquée, de l'invention, la ligne de fragilisation est constituée par deux demi-droites aboutissant à un point se trouvant dans la partie située à l'intérieur de la zone périphérique.

Ces demi-droites peuvent avoir la même longueur et leur point commun peut éventuellement être le centre de la partie entourée par la zone périphérique.

Par ailleurs, les demi-droites et les côtés longitudinaux de la languette peuvent être respectivement symétriques par rapport à une même droite séparant l'opercule en deux parties égales.

Selon l'invention, la zone périphérique est pourvue d'une deuxième languette de préhension se prolongeant dans la partie qu'elle entoure par une deuxième zone interne délimitée par une deuxième ligne de fragilisation dont les extrémités sont situées en deux endroits différents du bord extérieur de la zone périphérique, la deuxième ligne de fragilisation étant réalisée de telle sorte qu'à son niveau la résistance à la déchirure de l'opercule est inférieure à la force de scellage de la zone périphérique de ce dernier sur le rebord du récipient.

Un récipient fermé par un opercule ayant cette structure peut être partiellement ouvert par arrachement de l'une ou l'autre des deux languettes et convient donc parfaitement aussi bien à un droitier qu'à un gaucher.

Les deux languettes ont de préférence un point commun situé sur le bord extérieur de la zone périphérique, les deux lignes de fragilisation ayant l'une de leurs extrémités au niveau de ce point.

Les deux languettes et les deux lignes de fragilisation peuvent en outre être symétriques par rapport à une même droite séparant l'opercule en deux parties égales.

Par ailleurs, les côtés longitudinaux des languettes qui sont opposés peuvent être tangents à la périphérie de l'opercule.

Selon l'invention, chaque ligne de fragilisation est de préférence constituée par une succession de renfoncements allongés séparés les uns des autres par des zones non déformées, ces renfoncements pouvant être réalisés dans la face supérieure ou dans la face inférieure de l'opercule.

La présente invention concerne également les récipients dont l'entrée est délimitée par un rebord de scellage et qui sont fermés par un opercule selon la revendication 1.
- la figure 1 est une vue de dessus schématique d'un premier opercule non revendiqué fixé sur le rebord de scellage d'un pot à yaourt à boire ;
- la figure 2 est une vue en coupe schématique et partielle selon la ligne II-II de la figure 1 ;
- la figure 3 est une vue de dessus schématique d'un deuxième opercule non revendiqué fixé sur le rebord de scellage d'un pot à yaourt à boire ; et
- la figure 4 est une vue de dessus schématique d'un troisième opercule fixé sur le rebord de scellage d'un pot à yaourt à boire.

Les opercules que l'on peut voir sur les dessins ferment des pots à yaourt à boire. Ils pourraient cependant fermer d'autres récipients, par exemple contenant des boissons telles que des jus de fruit ou de l'eau, sans que l'on sorte pour autant du cadre de la présente invention.

D'une manière connue en soi, les pots comprennent une entrée 1 délimitée par un rebord de scellage 2 dirigé vers l'extérieur.

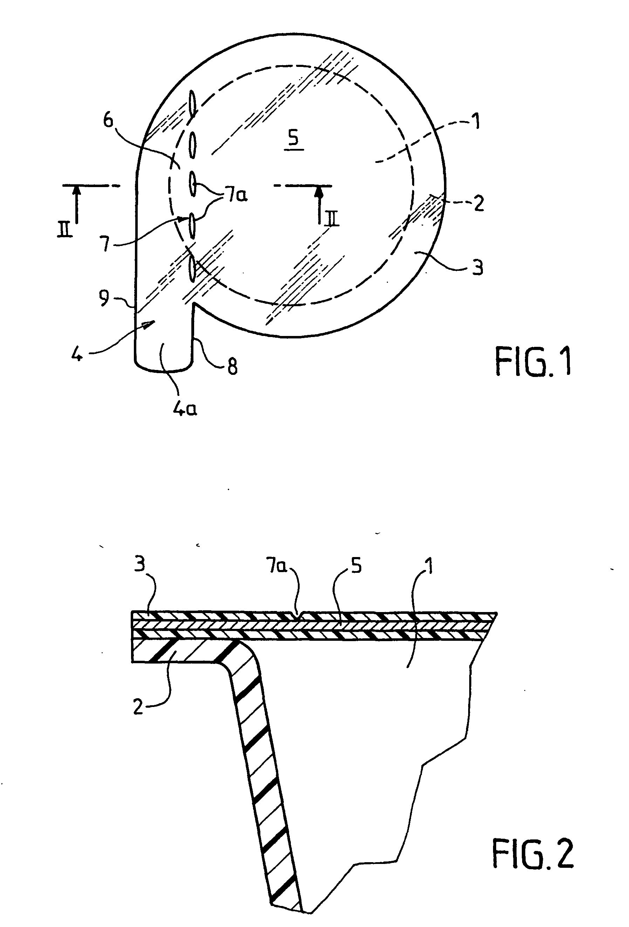

Quant aux opercules, ils comprennent une zone périphérique 3 fixée sur le rebord 2 des pots, de préférence par thermoscellage, et comprennent plusieurs couches superposées pouvant par exemple être constituées par un film métallique et deux films de matière plastique situés de part et d'autre du film métallique, comme représenté sur la figure 2.

Les opercules représentés sur les dessins comprennent une languette 4 se prolongeant dans la partie 5 qui est entourée par la zone périphérique 3 par une zone interne 6 délimitée par une ligne de fragilisation 7 dont les extrémités sont situées en deux endroits différents du bord extérieur de la zone périphérique 3.

La ligne de fragilisation 7 est réalisée sur chaque opercule de telle sorte qu'à son niveau la résistance à la déchirure de l'opercule concerné est inférieure à la force de scellage de la zone périphérique 3 sur le rebord 2 du récipient.

Dans le mode de réalisation représenté sur la figure 1, l'opercule comporte une languette 4a ayant deux côtés longitudinaux 8 et 9 parallèles l'un à l'autre.

La ligne de fragilisation 7 est une droite 7a située dans le prolongement du côté longitudinal 8 de la languette 4a.

On notera par ailleurs que le côté longitudinal 8 forme un angle aigu avec le bord extérieur de la zone périphérique 3 tandis que le côté longitudinal 9 est tangent à la périphérie de l'opercule et donc au bord extérieur de la zone périphérique 3.

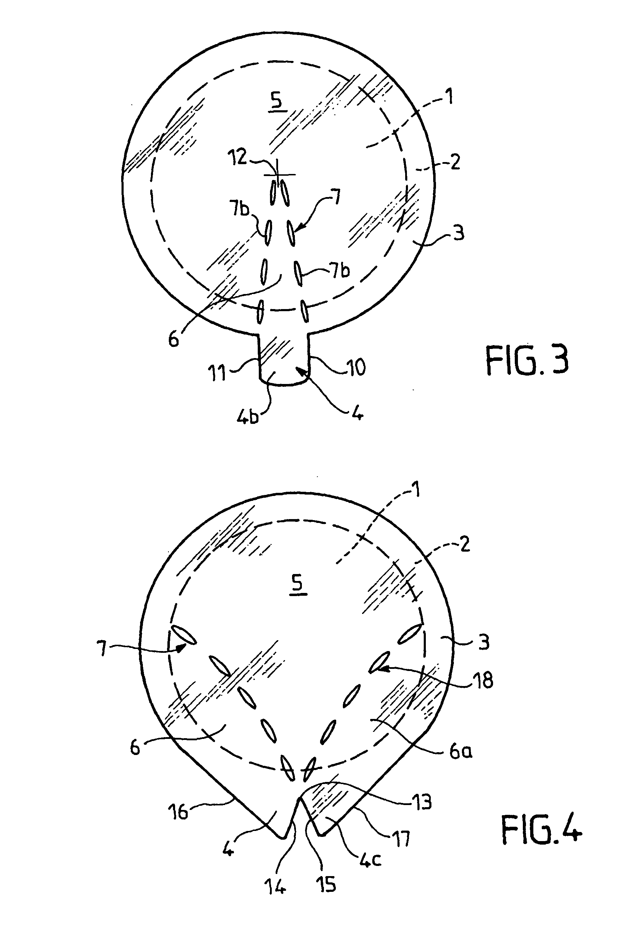

Dans le mode de réalisation représenté sur la figure 3, l'opercule comporte une languette 4b ayant deux côtés longitudinaux 10 et 11 parallèles l'un à l'autre.

La ligne de fragilisation 7 est constituée par deux demi-droites 7b aboutissant à un point 12 situé au centre ou pratiquement au centre de l'opercule.

On notera ici que la languette 4b est symétrique par rapport à une droite séparant l'opercule en deux parties égales et que les deux demi-droites 7b sont également inclinées sur cette droite.

Dans le mode de réalisation représenté sur la figure 4, l'opercule comporte deux languettes 4, 4c ayant un point commun 13 situé sur le bord extérieur de sa partie périphérique 3.

Les côtés adjacents 14 et 15 de ces languettes forment un angle aigu tandis que les côtés opposés 16 et 17 de ces derniers sont tangents à la périphérie de l'opercule.

Par ailleurs, les lignes de fragilisation 7 et 18 sont des courbes dont les extrémités sont situées l'une au niveau du point 13 et l'autre sur le bord extérieur de la zone périphérique 3.

On notera ici que les languettes 4 et 4c ont une forme triangulaire et sont symétriques, comme les lignes courbes 7 et 18, par rapport à une droite séparant l'opercule en deux parties égales.

On notera également que grâce à la position et à la forme particulières des languettes 4, 4c et des lignes courbes 7, 18, le récipient comportant l'opercule représenté sur la figure 4 peut être ouvert très facilement aussi bien par un consommateur droitier que par un consommateur gaucher, le consommateur pouvant ouvrir le récipient en arrachant la languette 4 ou 4c qui lui convient le mieux.

En ce qui concerne les lignes de fragilisation, elles sont constituées par une succession de renfoncements allongés séparés les uns des autres par des zones non déformées.

Elles peuvent être réalisées sur la face supérieure des opercules, comme représenté sur les dessins, ou sur la face inférieure de ceux-ci.

L'ouverture des récipients comportant un opercule selon l'invention est facile et rapide. Il suffit en effet d'exercer une traction sur la languette concernée, dans le sens de la ligne de fragilisation, de façon à déchirer l'opercule le long de cette ligne et à desceller la partie de la zone périphérique 3 qui s'étend de la languette à l'extrémité de la ligne de fragilisation qui est la plus éloignée de cette dernière.

Après l'ouverture, une entrée de dimension limitée est pratiquée dans l'opercule, laissant un passage restreint au produit conditionné et limitant fortement les risques d'éclaboussure et de renversement.

## Revendications

1. Opercule pour la fermeture d'un récipient dont l'entrée (1) est délimitée par un rebord de scellage (2), comportant une zone périphérique (3) destinée à être fixée sur le rebord de scellage (2) et pourvue d'une protubérance constituant une languette de préhension (4) se prolongeant dans la partie (5) située à l'intérieur de la zone périphérique (3) par une zone interne (6), cette zone étant délimitée par au moins une ligne de fragilisation (7) dont les extrémités sont situées en deux endroits différents du bord extérieur de la zone périphérique et qui est réalisée de telle sorte qu'à son niveau la résistance à la déchirure de l'opercule soit inférieure à la force de scellage de la zone périphérique de celui-ci sur le rebord du récipient, la zone périphérique (3) étant pourvue d'une deuxième languette de préhension (4c) se prolongeant dans la partie (5) qu'elle entoure par une deuxième zone interne (6a) délimitée par une deuxième ligne de fragilisation (18) dont les extrémités sont situées en deux endroits différents du bord extérieur de la zone périphérique (3), la deuxième ligne de fragilisation (18) étant réalisée de telle sorte qu'à son niveau la résistance à la déchirure de l'opercule soit inférieure à la force de scellage de la zone périphérique de ce dernier sur le rebord (2) du récipient, **caractérisé en ce que** les deux languettes (4, 4c) ont un point commun (13) situé sur le bord extérieur de la zone périphérique (3), les deux lignes de fragilisation (7, 18) ayant l'une de leurs extrémités au niveau de ce point.

2. Opercule selon la revendication 1, **caractérisé en ce que** les deux languettes (4, 4c) et les deux lignes de fragilisation (7, 18) sont symétriques par rapport à une même droite séparant l'opercule en deux parties égales.

3. Opercule selon la revendication 1 ou 2, **caractérisé en ce que** les côtés longitudinaux (16, 17) des languettes (4, 4c) qui sont opposés sont tangents à la périphérie de l'opercule.

4. Opercule selon l'une quelconque des revendications 1 à 3, **caractérisé en ce que** chaque ligne de fragilisation (7, 18) est constituée par une succession de renfoncements allongés séparés les uns des autres par des zones non déformées.

5. Opercule selon la revendication 4, **caractérisé en ce que** les renfoncements allongés sont réalisés dans l'une des faces supérieure et inférieure de l'opercule.

6. Récipient dont l'entrée est délimitée par un rebord de scellage, **caractérisé en ce qu'**il est fermé par un opercule selon l'une quelconque des revendications précédentes.

## Claims

1. A lid for closing a container the opening (1) of which is delimited by a sealing rim (2), including a peripheral zone (3) intended to be fixed to the sealing rim (2) and provided with a protuberance forming a grip tab (4) continuing into the portion (5) situated in the interior of the peripheral zone (3) by means of an internal zone (6), this zone being delimited by at least one line of weakness (7), the ends of which are situated in two different places on the outer edge of the peripheral zone and which is produced in such a manner that the tear strength of the lid along this line is lower than the sealing force of the peripheral zone of the lid relative to the rim of the container, the peripheral zone (3) being provided with a second grip tab (4c) continuing into the portion (5) it surrounds by means of a second internal zone (6a) delimited by a second line of weakness (18), the ends of which are situated in two different places on the outer edge of the peripheral zone (3), the second line of weakness (18) being produced in such a manner that the tear strength of the lid along this line is lower than the sealing force of the peripheral zone of the lid relative to the rim (2) of the container, **characterised in that** the two tabs (4, 4c) have a common point (13) situated on the outer edge of the peripheral zone (3), the two lines of weakness (7, 18) having one of their ends at this point.

2. A lid according to claim 1, **characterised in that** the two tabs (4, 4c) and the two lines of weakness (7, 18) are symmetrical with respect to one single straight line dividing the lid into two equal parts.

3. A lid according to claim 1 or claim 2, **characterised in that** the opposing longitudinal sides (16, 17) of the tabs (4, 4c) are tangential to the periphery of the lid.

4. A lid according to any one of claims 1 to 3, **characterised in that** each line of weakness (7, 18) is formed by a series of elongated indentations separated from one another by non-deformed zones.

5. A lid according to claim 4, **characterised in that** the elongated indentations are formed in one of the upper and lower faces of the lid.

6. A container the opening of which is delimited by a sealing rim, **characterised in that** it is closed by a lid according to any one of the preceding claims.

## Patentansprüche

1. Deckel zum Schließen eines Behälters, dessen Mündung (1) durch einen Siegelrand (2) begrenzt ist, aufweisend eine Umfangszone (3) zum Befestigen auf dem Siegelrand (2), welche Umfangszone (3) mit einem eine Greifzunge (4) bildenden Ansatz versehen ist, die in dem innerhalb der Umfangszone (3) liegenden Teil (5) in eine Innenzone (6) übergeht, wobei diese Zone (6) durch mindestens eine Bruchlinie (7) begrenzt ist, deren Enden an zwei verschiedenen Stellen des Außenrands der Umfangszone liegen und die derart hergestellt wird, dass die Zerreißfestigkeit des Deckels dort kleiner als die Siegelkraft der Umfangszone des Deckels auf dem Rand des Behälters ist, wobei die Umfangszone (3) mit einer zweiten Greifzunge (4c) versehen ist, die in dem von der Umfangszone (3) umrandeten Teil (5) in eine zweite Innenzone (6a) übergeht, die durch eine zweite Bruchlinie (18) begrenzt ist, deren Enden an zwei verschiedenen Stellen des Außenrands der Umfangszone (3) liegen, wobei die zweite Bruchlinie (18) derart hergestellt wird, dass die Zerreißfestigkeit des Deckels dort kleiner als die Siegelkraft der Umfangzone des Deckels auf dem Rand (2) des Behälters ist,
**dadurch gekennzeichnet, dass** beide Zungen (4, 4c) eine am Außenrand der Umfangszone (3) liegende gemeinsame Stelle (13) aufweisen, wobei das eine Ende von beiden Bruchlinien (7, 18) an dieser Stelle liegt.

2. Deckel nach Anspruch 1, **dadurch gekennzeichnet, dass** beide Zungen (4, 4c) und beide Bruchlinien (7, 18) bezüglich einer den Deckel in zwei gleichgroße Teile teilenden Geraden symmetrisch angeordnet sind.

3. Deckel nach Anspruch 1 oder 2, **dadurch gekennzeichnet, dass** die entgegengesetzten Längsseiten (16, 17) der Zungen (4, 4c) den Umfang des Deckels berühren.

4. Deckel nach einem der Ansprüche 1 bis 3, **dadurch gekennzeichnet, dass** jede Bruchlinie (7, 18) durch eine Folge von länglichen Ausnehmungen gebildet wird, die durch nicht verformte Zonen voneinander getrennt sind.

5. Deckel nach Anspruch 4, **dadurch gekennzeichnet, dass** die länglichen Ausnehmungen in einer der oberen und unteren Seiten hergestellt sind.

6. Behälter, dessen Mündung durch einen Siegelrand begrenzt ist, **dadurch gekennzeichnet, dass** der Behälter durch einen Deckel nach einem der vorhergehenden Ansprüche geschlossen ist.
